# EUROPEAN PATENT APPLICATION

(11) **EP 2 187 646 A1**
(43) Date of publication of application: **19.05.2010**
(21) Application number: 08827035.0
(22) Date of filing: 08.08.2008
(51) Int. Cl.: H04N 7/26

(54) **VIDEO STREAM PROCESSING DEVICE, ITS CONTROL METHOD, PROGRAM, AND RECORDING MEDIUM**

(30) Priority: 09.08.2007 JP 2007208163
(71) Applicant: Osaka University, Suita-shi Osaka 565-0871 (JP); Sharp Kabushiki Kaisha, Osaka-shi, Osaka 545-8522 (JP)
(72) Inventor: ONOYE. Takao, Suita-shi Osaka 565-0871 (JP); OHHARA, Kazuto, Osaka-shi Osaka 545-8522 (JP); WATANABE, Shuhichi, Osaka-shi Osaka 545-8522 (JP); OKADA, Hiroyuki, Osaka-shi Osaka 545-8522 (JP); NAKAZAWA, Masayuki, Osaka-shi Osaka 545-8522 (JP)
(74) Representative: Müller - Hoffmann & Partner
(86) International application number: PCT/JP2008/064337
(87) International publication number: WO 2009/020212

(57) **Abstract**

The apparatus includes an input selector 101 for selecting input video streams, a stream analyzer 102 for acquiring encoded information, a decoding section 103 for executing decoding processes, an output memory section 104 for recording decoded frame data, an output switching section 105 for selecting frame data to be output, a display output section 106 for outputting a display image on a display screen, a scheduling section 107 for assigning decoding processes, and an output image controller 108 for constructing an output display. In this way, it is possible to perform parallel decoding processes of video streams efficiently with limited resources and eliminate processing delay which would occur due to temporary concentration of temporally varying an amount of processing when a plurality of video streams are subjected to reproducing operations in parallel.

## Description

### Technical Field

The present invention relates to a video stream processing apparatus for simultaneously displaying a plurality of video contents on the screen, as well as relating to a control method, program and recording medium for the same.

### Background Art

With increase in the number of channels and the spread of broadband thanks to digitalization of broadcast, the amount of video contents available in the world, such as TV broadcast, DVD packages and distribution via the Internet, tends to increase. Further, owing to the development of recording media such as a hard disk drive, etc., into large capacity configurations, it has become possible at home to record and store a greater amount of video content, and the style of viewing videos at home has gradually changed such that any attractive content should be recorded as a temporary measure.

In order to permit the user to find out a target content from a huge number of videos, the so-called multi-representation for presenting a large number of video images in a list form is efficient. In particular, multi-representation of video thumbnails that enables intuitive selection of a target video has recently drawn attention.

In order to realize a multi-representation of video thumbnails, it is necessary to simultaneously decode and reproduce a plurality of video streams that have been encoded from video signals in the digital form in order to compress the amount of data. A technology for this purpose has been presented in patent document 1, for instance.

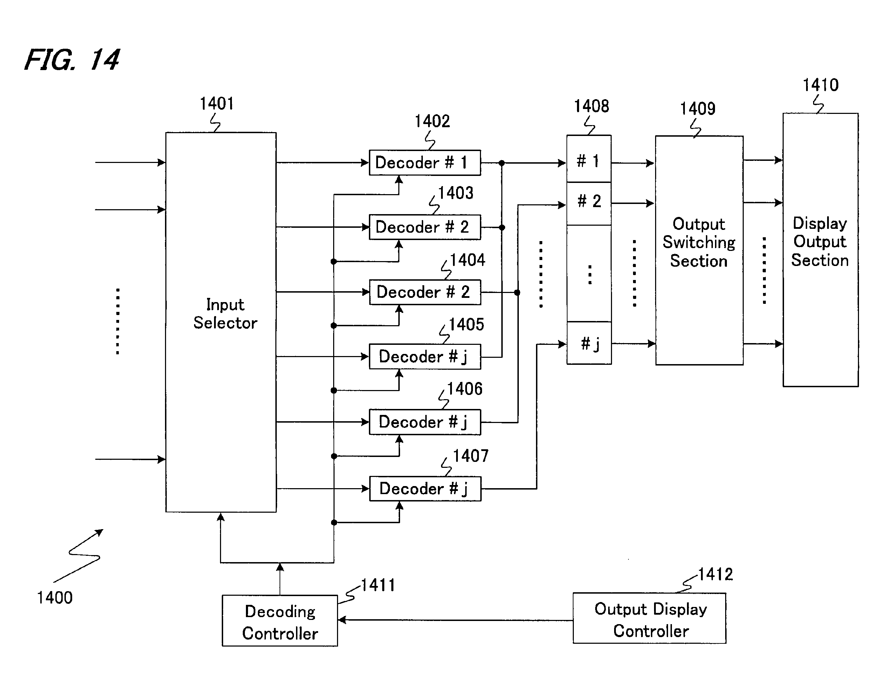

FIG. 14 is a block diagram showing a video stream apparatus based on the conventional technology disclosed in patent document 1. In an input selector 1401, j video streams designated by a decoding controller 1411 are selected from input video streams. Decoders are determined in accordance with the number, j, and the output streams are supplied to the determined decoders. As to the amounts of processing of the decoders, the decoders having different amounts of processing are activated in accordance with the number of video streams to perform decoding processes such that the amounts of processing of decoders 1403 and 1404 are set to be one half of that of decoder 1402, similarly the amounts of processing of decoders 1405 to 1407 are set to be one j-th, whereby a plurality of video streams are decoded without varying the total amount of processing.
Patent Document 1: Japanese Patent No. 3865190

### Disclosure of Invention

### Problems to be Solved by the Invention

In the above-described conventional technology, decoding processes of the amounts of processing in accordance with the number of video streams are assigned. It is a known fact that the amount of processing taken for decoding a video stream varies depending on time and there is a tendency that the amount of processing for a frame that was encoded by intra-frame prediction is greater than that for a frame that was encoded by inter-frame prediction. When, in decoding a plurality of video streams in parallel, frames that were encoded by intra-frame prediction and hence need large amounts of processing appear at the same time for execution of decoding, the loads concentrate temporarily, hence causing a processing delay problem. To deal with this problem, the conventional technology cannot help taking a margin for the amount of processing so as to cope with the processing of frames that were encoded by intra-frame prediction and hence need large amounts of processing, hence the amount of processing per video stream is estimated to be greater. As a result, there occurs the problem that decoding means having a lower amount of processing than needed is selected.

The present invention has been devised to solve the above problem, it is therefore an object to make efficient use of limited resources and improve the quality of reproduction or the number of reproducible streams by assigning appropriate amounts of processing to the decoding processes without selecting decoding means having a lower amount of processing than needed.

### Means for Solving the Problems

A video stream processing apparatus according to the present invention is a video stream processing apparatus including an input selector for selecting a plurality of video streams and a decoding section for executing decoding processes of the selected video streams in parallel, and comprises: a stream analyzer for analyzing the selected video streams to acquire encoded information as to one frame of video; and a scheduling section for adjusting execution of the decoding processes of the selected video streams in accordance with the encoded information so that loads of the decoding processes in the decoding section are made even with respect to time.

The apparatus further includes an output display controller for determining and changing a display form of the video streams on a display screen, and is **characterized in that** the scheduling section determines and changes priority orders in a reproduction order of the video streams in accordance with the display form on the display screen that was determined and changed by the output display controller.

The processing apparatus is also **characterized in that** the stream analyzer acquires information that represents that types of encoded frames in the video streams are either intra-frame prediction encoding or inter-frame prediction encoding, and the scheduling section adj usts execution timings of decoding processes so as to scatter the decoding processes of the frames encoded by intra-frame prediction with respect to time.

The apparatus is also **characterized in that** the scheduling section evaluates a load on a decoding process of an encoded frame in the decoding section to determine whether decoding of the frame is executable and control execution of the decoding processes of frames encoded by the intra-frame prediction and encoded by the inter-frame prediction.

The apparatus is also **characterized in that** the stream analyzer calculates the amount of codes of a coded frame in the video stream, and the scheduling section estimates from the amount of codes the encoded type of the frame to be either intra-frame prediction encoding or inter-frame prediction encoding and adjusts execution timings of decoding processes so as to scatter the decoding processes of the frames that are estimated to be that encoded by the intra-frame prediction, with respect to time.

The apparatus is also **characterized in that** the scheduling section estimates from the amount of codes a load on the decoding process of the frame in the decoding section to determine the decoding section that can decode the frame, based on an operation rate.

A control method for a video stream processing apparatus according to the present invention is a control method for a video stream processing apparatus including an input selector for selecting a plurality of video streams and a decoding section for executing decoding processes of the selected video streams in parallel, and comprises the steps of: analyzing the selected video streams to acquire encoded information on one frame of video; and adjusting execution of the decoding processes of the selected video streams in accordance with the encoded information so that loads of the decoding processes in the decoding section are made even with respect to time.

Also, a program according to the present invention is characterized by causing a computer to execute the above control method for the video stream processing apparatus.

Also, a recording medium according to the present invention is characterized by being recorded with the above program in a computer-readable manner.

### Advantage of the Invention

According to the present invention configured of each technical means described above, since the order of executing decoding processes is adjusted adaptively in accordance with the encoded types of frames that constitute video streams, and since the necessary amounts of processing are assigned for decoding, decoding can be managed without use of decoding means with a predetermined amount of processing. Accordingly, there is no need to secure a large amount of processing for one video stream in accordance with the processing amount of I-picture, hence assignment of suitable amounts of processing to decoding processes without selecting any decoding means that is lower in the amount of processing than needed, enables improvement of the quality of reproduction and increase of the number of video streams that can be reproduced, using limited resources efficiently.

### Brief Description of Drawings

[FIG. 1] is a block diagram showing a configurational example of a video stream processing apparatus according to the first embodiment of the present invention.
[FIG. 2] is a block diagram showing a configurational example of a stream analyzer according to the first embodiment of the present invention.
[FIG. 3] is a block diagram showing a configurational example of a scheduling section according to the first embodiment of the present invention.
[FIG. 4] is a flow chart showing the overall process of the scheduling section according to the first embodiment of the present invention.
[FIG. 5] is a flow chart showing the processing flow of ST 405 in FIG. 4.
[FIG. 6] is a flow chart showing the processing flow of ST 409 in FIG. 4.
[FIG. 7] is a diagram showing an example of display form of video streams in accordance with the first embodiment of the present invention.
[FIG. 8] is a diagram showing an example of a process table according to the first embodiment of the present invention.
[FIG. 9] is a chart showing the order of executing decoding processes according to the first embodiment of the present invention.
[FIG. 10] is a block diagram showing a configurational example of a video stream processing apparatus according to the second embodiment of the present invention.
[FIG. 11] is a block diagram showing a configurational example of a scheduling section according to the second embodiment of the present invention.
[FIG. 12] is a flow chart showing the overall process of the scheduling section according to the second embodiment of the present invention.
[FIG. 13] is a diagram showing an example of a process table according to the second embodiment of the present invention.
[FIG. 14] is a block diagram showing a configurational example of a video stream processing apparatus according to the prior art.

### Description of Reference Numerals

100 video stream processing apparatus
101 input selector
102 stream analyzer
103, 111, 112 decoding section
104 output memory section
105 output switching section
106 display output section
107, 113 scheduling section
108 output display controller
110 input switching section

### Best Mode for Carrying Out the Invention

Hereinbelow, the embodiments of the present invention will be described with reference to the drawings. Those allotted with the same reference numerals represent the same components.

### <The First Embodiment>

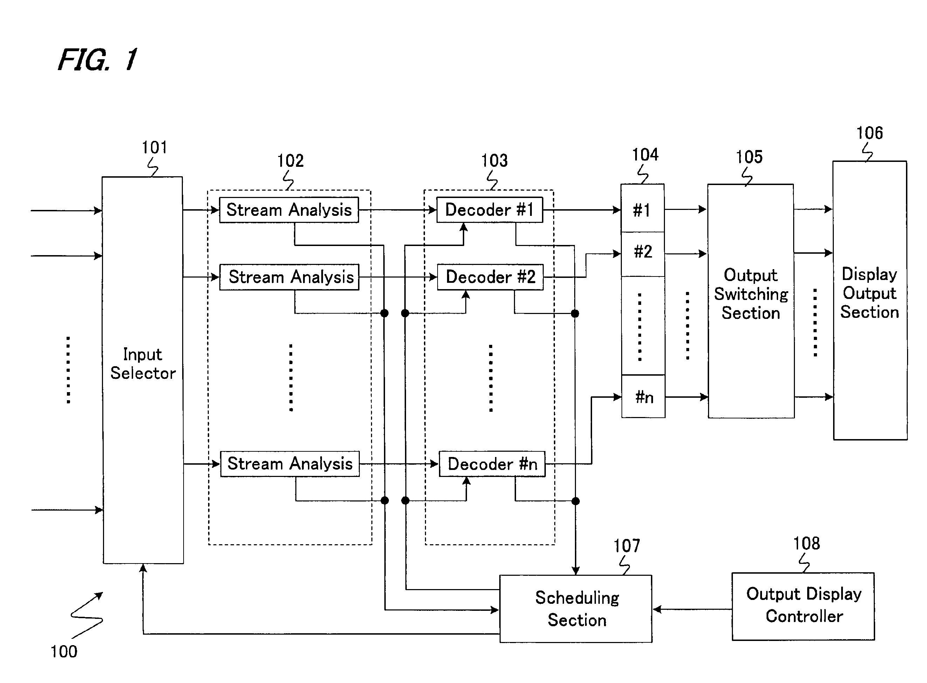

FIG. 1 is a block diagram showing a configurational example of a video stream processing apparatus 100 according to the first embodiment of the present invention.

As shown in FIG. 1, video stream processing apparatus 100 includes an input selector 101, a stream analyzer 102, a decoding section 103, an output memory section 104, an output switching section 105, a display output section 106, a scheduling section 107 and an output display controller 108.

Components that constitute the configuration of the present invention are realized by hardware configured of a microprocessor, memory, bus, interface, peripherals, etc., and software that is executable on the hardware.

In this configuration, video stream processing apparatus 100 decodes a plurality of video streams that are supplied through input selector 101, in parallel, and outputs these from display output section 106 in such a style as to be seen and viewed on the display screen simultaneously. Here, the display form of the video streams, that is, how the video streams are displayed is determined by output display controller 108. The display on the display screen may be given as a playback representation of one video stream, dual-frame representation of a main frame and sub-frame or a multi-representation of a list of viewable videos as used in a large-capacity recording apparatus, a video on demand system or the like. The video streams to be displayed are selected by input selector 101 via scheduling section 107.

Input selector 101 is connected to external devices such as a storage means (e.g., hard disk drive etc.) made up of a recording medium and its reading device and/or a communication means (e. g. , LAN etc.) for sending and receiving data via a communication path, selects n (n is a natural number) video streams from the video streams receivable from the external devices, and outputs video streams #1 to #n to stream analyzer 102. Here, the figures 1 to n denote the reproduction order; the smaller the number, the higher priority order in the reproduction order is given to the video stream. In short, 1 represents the highest priority order, whereas n represents the lowest priority order.

The selected video streams #1 to #n are output from input selector 101 to stream analyzer 102. Stream analyzer 102 extracts encoded information (especially information of the header portion) for one frame or one field of video from video streams #1 to #n. This encoded information is used at scheduling section 107. The encoded data for one frame or one field after acquisition of the encoded information is stored in the interior buffer, and read out by decoding section 103, depending on the process status. The frame is made up of a plurality of lines that represent display information of video signals. In the case of interlaced video, the frame is made up of two fields. In encoding technologies such as MPEG and the like, the term, picture, is generally used as the term representing a frame or field. Hereinbelow, unless otherwise specified, the frame inclusive of the concept of the field is handled as the same meaning as the picture.

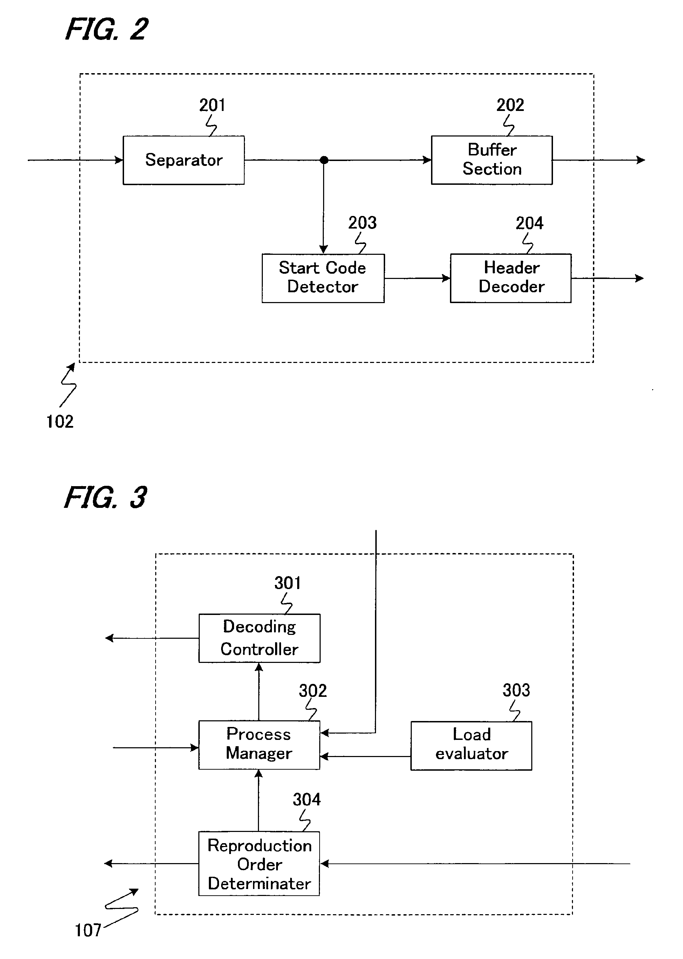

FIG. 2 shows a configurational example of stream analyzer 102. Stream analyzer 102 includes a separator 201, a buffer section 202, a start code detector 203 and a header decoder 204.

The video stream input to stream analyzer 102 is multiplexed with plural kinds of streams such as video (which will be referred to hereinbelow as moving picture), sound, text, other additional information, etc. Of these, the stream of the moving picture alone is separated by separator 201. Start code detector 203 detects a particular pattern representing the start code from the stream of the moving picture to find a header portion in the frame layer. Header decoder 204 decodes the header portion to acquire encoded information (e.g., picture coding type). While buffering encoded data of a frame in buffer portion 202, and when start code detector 203 has detected two start codes before and after, the data appearing between these start codes is the encoded data of a frame.

As controlled by scheduling section 107, decoding section 103 reads out the encoded data of the frame from buffer portion 202 of stream analyzer 102 and decodes the data to reconstruct frame data. The frame data after reconstruction from the encoded data is output to output memory section 104. The frame data is stored in output memory section 104. Decoders #i (i is a natural number from 1 to n) provided in decoding section 103 are constructed so as to be able to execute a plurality of decoding algorithms different in the amount of operations, and also can be designated with the priority orders with respect to processing.

In accordance with the control from output display controller 108, output switching section 105 selects frame data of video streams to be output to display output section 106 from output memory section 104. Frame data #1 to #n are read out in accordance with the layout or the order of display.

As described heretofore, upon selection of video contents to display the selected video contents, control for making the loads of the decoding processes of a plurality of video streams even with respect to time is carried out by scheduling section 107. Next, scheduling section 107 will be described with reference to FIGS. 3 to 6.

FIG. 3 is a block diagram showing a configurational example of scheduling section 107. As shown in FIG. 3, scheduling section 107 includes a decoding controller 301, a process manager 302, a load evaluator 303 and a reproduction order determinater 304. Decoding controller 301 controls the operation of decoding section 103. Process manager 302 manages the execution status of the decoding processes in decoders #1 to #n in decoding section 103 for decoding video streams #1 to #n, such as to adjust the execution timings and the like. Load evaluator 303 estimates the amounts of processing of the decoding processes in decoding section 103 and evaluates, for example, load on the CPU. Reproduction order determinater 304, based on the designation from output display controller 108, determines the reproduction order of video streams.

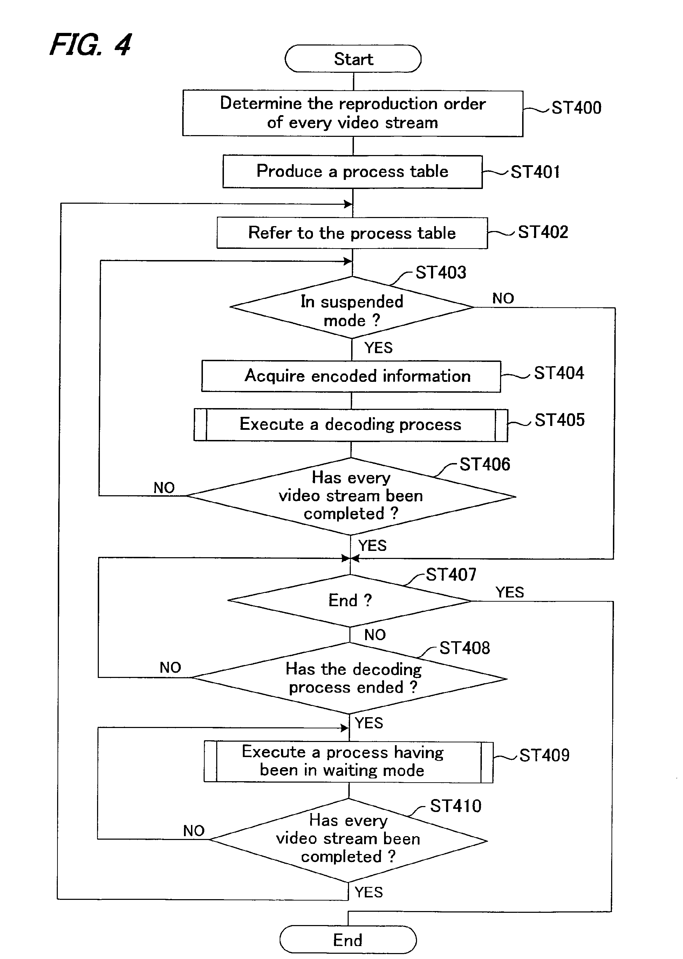

FIGS. 4 to 6 are flow charts showing the processing flow of scheduling section 107. To begin with, the overall flow of the process of scheduling section 107 will be described with reference to FIG. 4.

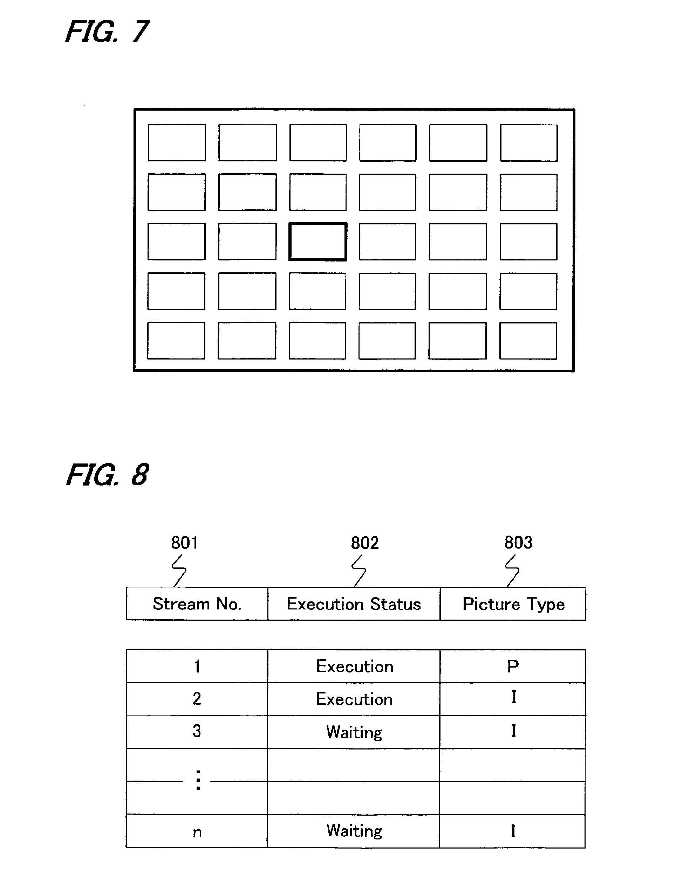

Video streams to be reproduced and the order of display are designated by output display controller 108, and scheduling section 107 starts its operation. First, at Step (ST) 400, reproduction order determinater 304 determines the order of reproducing video streams. This is determined based on the display form (e.g., arrangement, screen layout, display order of thumbnails) of video streams given from output display controller 108. One example of a display form is shown in FIG. 7. This example shows a configuration in which 30 thumbnails corresponding to video streams are arranged in a matrix with five rows and six columns. The display order of thumbnails is to designate the order in which these 30 thumbnails are displayed. In FIG. 7, the bold outline that encloses a thumbnail is a cursor that is used to select a thumbnail. The reproduction order may be the display order, for example, or the closer to the center a thumbnail is located, the higher priority order in the reproduction order may be given. Input selector 101 selects video streams in accordance with the reproduction order. Further, process manager 302 produces a process table (ST401). FIG. 8 shows an example of the process table. In this example, the process table includes as many entries as the number of video streams, each entry having fields for stream number 801, execution status 802 and picture coding type 803.

Process manager 302 determines whether frame decoding processes are executed or not, in the reproduction order of video streams (in the order from #1 to #n). First, in order to check the execution status of the decoding process for video stream #i, the process table is referred to (ST402). Then, from the result of reference, it is determined at ST403 whether or not the execution is in a state of suspension. If the execution is in the state of suspension, the operation goes to ST404. Otherwise, the operation goes to ST407. At ST404, process manager 302 acquires from stream analyzer 102 the encoded information on the frames of video stream #i to be processed. In ST405, the decoding process is executed taking into account the encoded information and the executing status of other decoding processes. In this step, process manager 302 checks whether the decoding process is executable. If it is executable, decoding controller 301 makes control so as to execute the decoding process in decoding section 103. Otherwise, the decodingprocess is suspended. At ST406, it is determined whether each video stream (for all i's) has been processed through ST403 to 405. If all video streams #1 to #n have been processed, the operation goes to the next step ST407. Otherwise, the operation goes to ST403.

Description heretofore is the process related to the control for starting a decoding process in decoding section 103. It is determined at ST407 whether this process is ended. The process end corresponds to when the decoding process for all the video streams is ended and the end by external factors such as user's instruction etc. If there is no ending factor (in the case where NO is selected at ST407), the operation goes to the next step ST408. The process from this point forward is the control that is started after the end of the decoding process that is being executed in decoding section 103.

At ST408, process manager 302 determines whether a notice of the end of the decoding process is given from decoding section 103. If the end notice is given, the operation goes to ST409. Otherwise, the operation goes to ST407. That is, if there is no end notice, this step is repeated while waiting for the end notice to be given. At ST409, process manager 302 determines once again whether the decoding process that was determined to be waited at the aforementioned ST405 is executable. If it is executable, the decoding process is executed. Otherwise, the decoding process is waited. At ST410, it is determined whether the process for each video stream #i at S409 has been finished. If video streams #1 to #n have been processed, the operation goes to ST402. Otherwise, the operation goes to ST409.

As described heretofore, it is possible to execute the executable decoding processes as appropriate, based on the execution status of the decoding process of video streams.

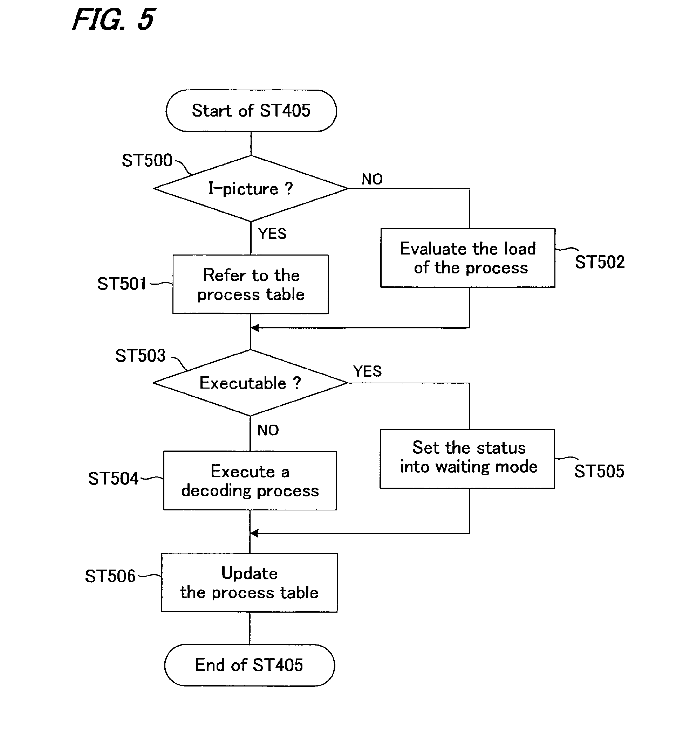

FIG. 5 is a flow chart showing the processing flow of the aforementioned ST405. In ST405, first, based on the encoded information, the process is branched depending on the frame predictive encoding method (ST500). Here, the predictive encoding method is either intra-frame predictive encoding for encoding a frame within the frame without regards to the frames before and after, or inter-frame predictive encoding for encoding the difference between frames, based on prediction between frames. Here, frame predictive encoding method is referred to as a picture coding type and a frame that has been encoded by intra-frame prediction is called an I-picture. At ST500, if the encoded frame of video stream #i is the I-picture, YES is selected so that the operation goes to ST501. Otherwise, NO is selected and the operation goes to ST502.

At ST501, process manager 302 refers to the process table to check the picture coding type as to the decoding process of another video stream that is already being executed. If no decoding process of another I-picture is being executed, the decoding process of video stream #i is regarded as being executable. If a decoding process of an I-picture is already being executed, the decoding process of video stream #i is regarded as being inexecutable.

At ST502, load evaluator 303 estimates the amount of load on decoding section 103, and process manager 302 determines whether the decoding process of the frame is executable, based on the amount of load. Here, load evaluator 303, referring to the process table of process manager 302, estimates increase of the amount of load on the decoding process of video stream #i. Since the amount of load also depends on the algorithm for the decoding process, other than the picture coding type, the amount of load is evaluated appropriately by estimating the amounts of processing for a plurality of decoding algorithms taking into account the reproduction order (that is, the video stream number i). Process manager 302 determines that the decoding process for video stream #i is executable if it is possible to perform decoding without delay. If it is impossible to increase the amount of load any more, the decoding process for video stream #i is determined to be inexecutable. Here, as a technique for reducing load, control may be performed aiming at decoding I-pictures alone if the priority order in the reproduction order is low (when the i value is large in the present embodiment). Further, it is assumed in the description heretofore that process manager 302 is adapted to make such control that the execution timings of decoding I-pictures will not overlap with each other. However, it is possible to scheme such control that decoding processes of a plurality of I-pictures overlap within the range permitted by the amount of processing of decoding section 103.

As performed in ST501 and ST502, depending on picture coding types, criteria for determining whether a decoding process is executable are defined separately. Then, when the decoding process is determined to be executable (ST503), decoding controller 301 executes a decoding process by designating the algorithm for the decoding process and the priority order (high, medium, low, etc. for example) during execution, and sets the execution status of video stream #i to be "execution" (ST504). When the process is inexecutable, the execution status of video stream #i set to be "waiting". Finally, the execution status of the process table is updated (ST506) and the operation at ST504 is ended.

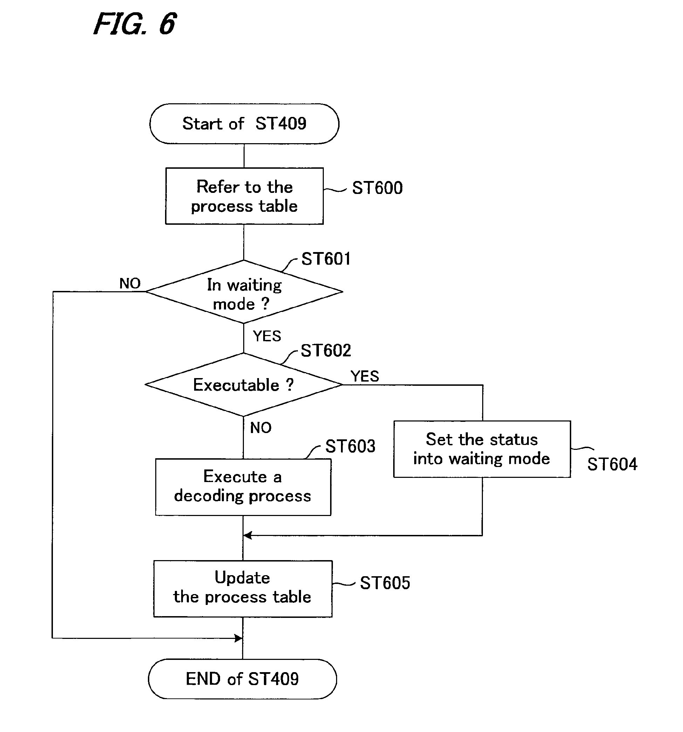

FIG. 6 is a flow chart showing a processing flow of the above-described step ST409. In ST409, the decoding process with its execution status set to be "waiting" is executed in accordance with the reproduction order of video streams. First, process manager 302, referring to the process table, acquires the execution state of video stream #i (ST600). It is determined whether the acquired execution state is "waiting" or not (ST601), and if it is in waiting mode, the operation goes to ST602. Otherwise, ST409 is ended. At ST602, similarly to the aforementioned ST500 to ST503, it is determined whether the decoding process of video stream #i having been waited is executable. The operations from ST603 to ST605 are the same as in ST504 to ST506, so that description is omitted.

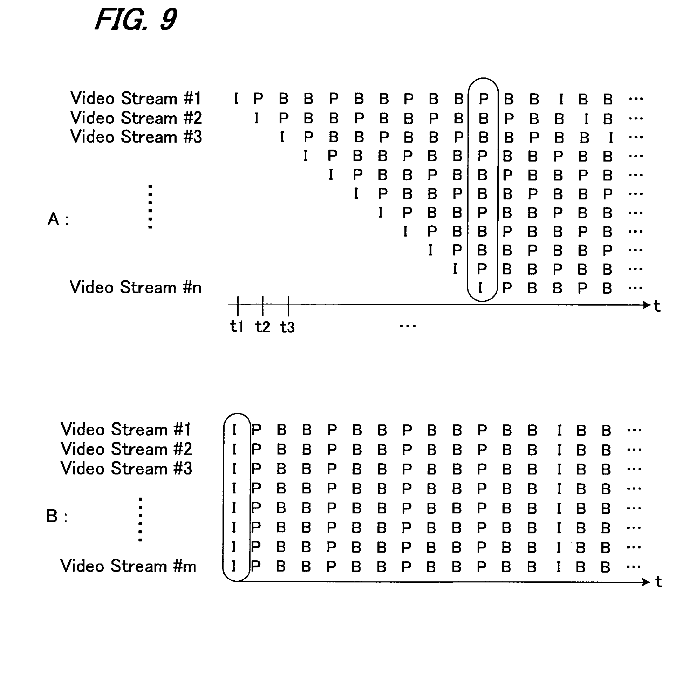

FIG. 9(A) shows an exemplary case for processing n video streams as a processing example of scheduling section 107. In FIG. 9(A), the letter of the alphabet I denotes an I-picture, P a P-picture (indicating a frame that is predictively encoded in the forward direction among the frames encoded by inter-frame prediction) and B a B-picture (indicating a frame that is predictively encoded bidirectionally or encoded by bi-prediction among the frames encoded by inter-frame prediction). It is assumed that in each video stream #i a picture coding type pattern of IBBPBBPBBPBBPBB··· is repeated. The horizontal axis represents time and the decoding process of each frame is assumed to end within a fixed period of time. That is, in this case the amount of processing per unit time is different depending on the picture coding type.

First, scheduling section 107 executes the decoding process of I-picture at the lead of video stream #1 at time t1 while the processes for the other video streams are set in waiting mode. Then, when a fixed time has lapsed and the decoding process of the I-picture of video stream #1 is completed, the decoding process of I-picture of video stream #2 having been in waiting mode is executed at time t2. Here, the processes for video streams #3 to #n are again set in waiting mode. Though video stream #1 is suspended, the target to be decoded next is a P-picture. Therefore, scheduling section 107 implements the decoding process of video stream #1 by bringing the suspended mode into the execution mode. Similarly to the above, the decoding processes in video streams #3 to #n are sequentially performed at and after time t3, and processed in parallel within the range permissible by the amount of processing. If all the video streams are decoded at the same time under the same condition, the decoding processes of I-pictures which need relatively large amounts of processing overlap each other at the same time as shown in FIG. 9(B), so that the number of video streams that can be decoded at the same time will be limited (here m < n). It is known from computer simulation that the ratio of the amounts of processing required for decoding processes of I-picture, P-picture and B-picture can be roughly estimated to be 9:5:6. When there is a processing capacity which allows eight video streams to be decoded when all the video streams are processed simultaneously in parallel as shown in FIG. 9(B), twelve video streams (1 I-picture, 4 P-pictures and 7 B-pictures) can be decoded by shifting time as in FIG. 9(A).

Here, stream analyzer 102 acquires information obtained by decoding the header portion of a frame as the encoded information of the frame to be decoded, and scheduling section 107 determines whether the decoding process of the frame is executed, based on the encoded information (picture coding type etc.) of the frame. The amount of data (the amount of codes) of a coded frame is generally greater for I-picture and is relatively smaller for P and B-pictures compared to that for I-picture. This is because all the macro blocks are encoded in the I-picture though depending on the condition at the time of encoding, whereas the P- and B-pictures do not include any data for the macro blocks for which encoding was skipped. Accordingly, it is possible to determine the picture coding type of a frame that is going to be decoded, from the difference in the amount of codes.
Hence, it is possible to make correspondence between the amount of codes and the picture coding type without the need to decode the encoded information by stream analyzer 102. As a result, it is possible for scheduling section 107 to schedule the decoding processes based on the amount of codes of the frame or the estimation of the picture coding type that is made correspondence to the amount of codes, instead of using the picture coding type as the encoded information. Here, it is possible to obtain the amount of codes of a frame by counting the amount of data processed by start code detector 203. The format of the video stream input to the video stream processing apparatus of the present invention may be provided with a field for storing information that indirectly or directly indicates the amount of processing required for decoding the frame, such as the picture coding type or the amount of codes per frame. Further, in the apparatus for generating video streams, the above information may be attached as additional information to the frames included in the packet so as to form a video stream when the video stream is packetized.

Further, as described above, scheduling section 107 determines the reproduction order of video streams based on the arrangement of video streams and screen layout supplied from output display controller 108. The reproduction order maybe determined not only after the start of a decoding process, but when output display controller 108 changes the display mode in accordance with the control state that the user gives to the video stream processing apparatus during the decoding process, scheduling section 107 may change the reproduction order during the decoding process in conformity therewith. For example, in the multi-representation of moving picture thumbnails output from display output section 106, as the multi-representation distance (the distance from the selected area) from the area (cursor position) the user is paying attention to is greater, the priority order in the reproduction order may be lowered. Alternatively, the priority order in the reproduction order may be lowered when the scene is not important. Importance or unimportance as to a scene may be determined based on, for example, user's view history/degree of interest/the degree of correspondence to the theme the user is searching at present, and the like.

As described heretofore, according to the present embodiment, the execution times of decoding processes are adjusted and distributed in accordance with the picture coding types so that the decoding processes of I-pictures which impose heavy processing loads will overlap as little as possible in the same time zone. Accordingly, it is possible to execute reproduction of a plurality of video streams efficiently without reducing the amount of processing assigned to the decoding processes more than needed even with limited resources. As a result, it is possible to increase the number of video streams that can be reproduced at the same time and improve the quality of reproduction.

### <The Second Embodiment>

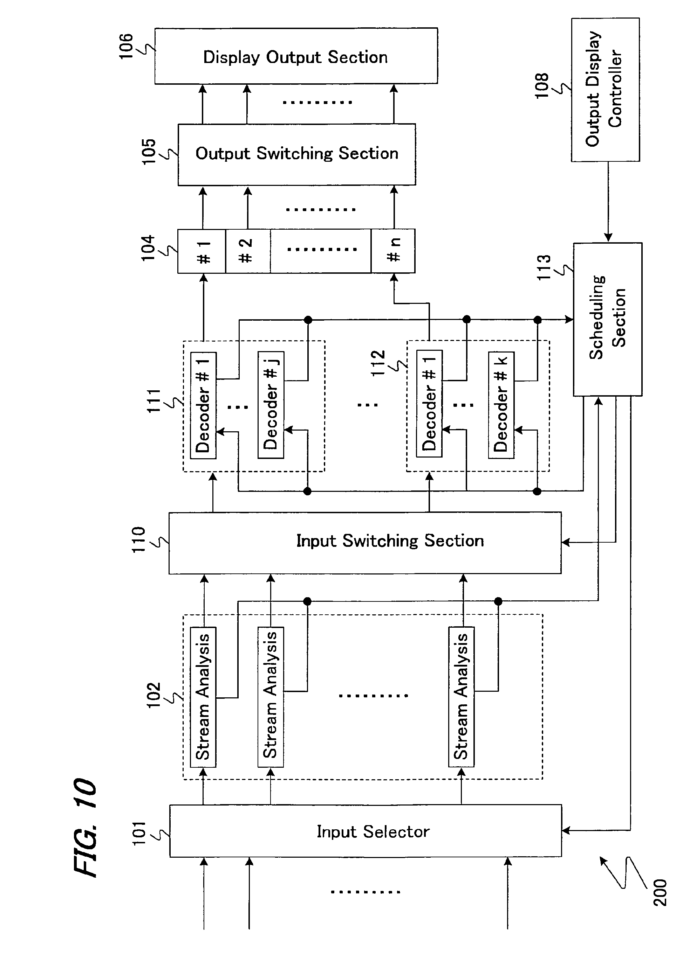

FIG. 10 is a block diagram showing a configurational example of a video stream processing apparatus 200 according to the second embodiment of the present invention. As shown in FIG. 10, video stream processing apparatus 200 includes an input selector 101, a stream analyzer 102, an input switching section 110, decoding sections 111 and 112, an output memory section 104, an output switching section 105, a display output section 106, a scheduling section 113 and an output display controller 108. Here, decoding sections 111 and 112 have the same configuration as that of the aforementioned decoding section 103.

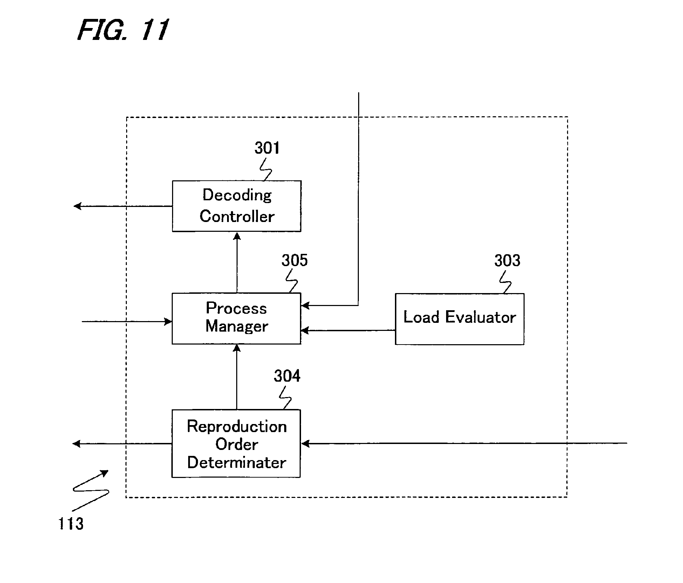

Further, FIG. 11 is a block diagram showing a configurational example of scheduling section 113. Scheduling section 113 includes a decoding controller 301, a load evaluator 303, a reproduction order determinater 304 and a process manager 305. Process manager 305 controls input switching section 110 to thereby adjust input of video streams #1 to #n into decoding sections 111 and 112 and assign the decoding processes inside decoding sections 111 and 112 for decoding.

With this configuration, video stream processing apparatus 200 decodes a plurality of video streams input through input selector 101 in parallel and outputs the streams from display output section 106 in such a style as to be seen and viewed simultaneously on the display screen. The function heretofore is the same as that of the first embodiment. The difference is that a plurality of decoding sections are provided and the input switching section is used to adjust which decoding section should perform the decoding process of each of the plurality of input video streams.

Input selector 101 selects n video streams from the receivable video streams so as to output them as video streams #1 to #n to stream analyzer 102. Stream analyzer 102 processes video streams #1 to #n and calculates the amounts of codes of the encoded data for one frame. The video streams are stored in the internal memory so as to be read out by decoding section 103, depending on the processing status. The operation up to this is the same as in the first embodiment.

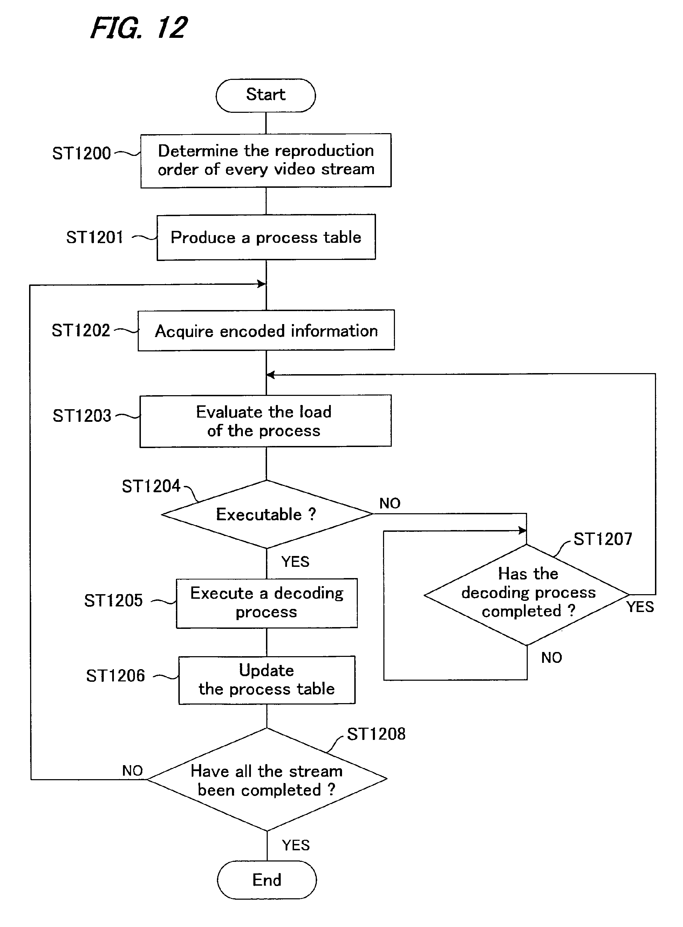

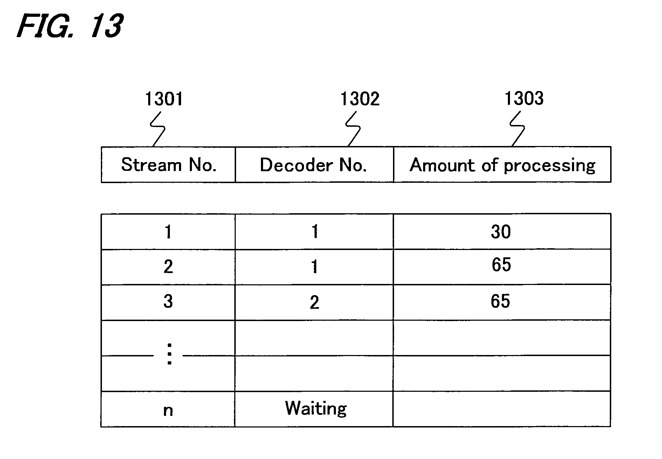

The amounts of codes for one frame of video streams #1 to #n are input to scheduling section 113. FIG. 12 shows a flow chart of the process, which scheduling section 113 performs at this time. In scheduling section 113, reproduction order determinater 304 determines the order of reproducing video streams (ST1200) and process manager 305 produces a process table (ST1201). The process table example is shown in FIG. 13. In this example, the table includes as many entries as the number of video streams, each entry having fields for stream number 1301, decoding section number 1302 and amount of processing 1303.

Next, at ST1202, process manager 305 acquires encoded information (the amount of codes) on one frame of video stream #i. Then, load evaluator 303 determines the amount of processing of the decoding process presumed from the amount of codes acquired from process manager 305 and evaluates the current loads on decoding sections 111 and 112, based on amount of processing 1303 in the process table

At ST1204, in accordance with the evaluation result from load evaluator 303, process manager 305 determines whether the decoding process is executable and selects, if the process is executed, which of the plurality of decoding sections the decoding process is assigned to. Decoding processes may be assigned to the plurality of decoding sections, for example in turn, may be assigned by weighting in accordance with the predetermined processing capacities, may be assigned to one decoding section until the total exceeds the maximum processing capacity, or may be assigned to one that is lowest in operating rate followed by the second lowest in sequence. Here, when it is determined that the decoding process is exactable (in the case of YES at ST1204), the operation goes to ST1205. When it is determined that the decoding process is inexecutable (in the case of NO at ST1204), the decoding process is set into waiting mode, and the operation goes to ST1207.

At ST1205, process manager 305 controls input switching section 110 so that the encoded data of video stream #i is input to the decoding section that was previously selected at ST1204. Decoding controller 301 designates the algorithm for the decoding process and the priority order during execution, and executes the decoding process. After execution, process manager 305 updates the process table (ST1206).
At ST1208, process manager 305 determines whether video streams #1 to #n have been all reproduced (decoded) or not. When reproduction of all the video streams has been completed (in the case of YES), the operation is ended. When reproduction of all the video streams has not been completed (in the case of NO at ST1208), the operation goes to ST1202.

On the other hand, at ST1207, it is determined whether the end notice of decoding from decoding sections 111 and 112 is given. If the end notice has been given (in the case of YES), the operation goes to ST1203. Otherwise (in the case of NO), this loop is repeated to wait for the notice.

As described heretofore, it is possible to execute decoding processes by selecting appropriate decoding sections based on the amounts of processing needed for the decoding processes of video streams.

It shouldbe noted, the object of the present invention can also be achieved by providing a recording medium on which program codes of software for realizing the function of the embodiment of the present invention is recorded, to an apparatus which executes the program codes by means of a microprocessor or DPS. In this case, the program codes of software is regarded to realize the function of the present embodiment, and the recording medium with the program codes recorded constitutes the present invention.

Though the embodiment of the present invention has been described heretofore, the video stream processing apparatus, its control method, program and recording medium of the present invention should not be limited to the above embodiment, and it goes without saying that various modifications can be added within the range not departing from the gist of the present invention.

## Claims

1. A video stream processing apparatus including an input selector for selecting a plurality of video streams and a decoding section for executing decoding processes of the selected video streams in parallel, comprising:
a stream analyzer for analyzing the selected video streams to acquire encoded information as to one frame of video; and
a scheduling section for adjusting execution of the decoding processes of the selected video streams in accordance with the encoded information so that loads of the decoding processes in the decoding section are made even with respect to time.

2. The video stream processing apparatus according to Claim 1, further comprising an output display controller for determining and changing a display form of the video streams on a display screen,
wherein the scheduling section determines and changes priority orders in a reproduction order of the video streams in accordance with the display form on the display screen that was determined and changed by the output display controller.

3. The video stream processing apparatus according to Claim 1 or 2, wherein the stream analyzer acquires information that represents that encoded types of frames in the video streams are either intra-frame prediction encoding or inter-frame prediction encoding, and
the scheduling section adjusts execution timings of decoding processes so as to scatter the decoding processes of the frames encoded by intra-frame prediction with respect to time.

4. The video stream processing apparatus according to Claim 3, wherein the scheduling section evaluates a load on a decoding process of an encoded frame in the decoding section to determine whether decoding of the frame is executable and control execution of the decoding processes of frames encoded by the intra-frame prediction and encoded by the inter-frame prediction.

5. The video stream processing apparatus according to Claim 1 or 2, wherein the stream analyzer calculates the amount of codes of a coded frame in the video stream, and
the scheduling section estimates from the amount of codes the encoded type of the frame to be either intra-frame prediction encoding or inter-frame prediction encoding and adjusts execution timings of decoding processes so as to scatter the decoding processes of the frames that are estimated to be that encoded by the intra-frame prediction, with respect to time.

6. The video stream processing apparatus according to Claim 5, wherein the scheduling section estimates from the amount of codes a load on the decoding process of the frame in the decoding section to determine the decoding section that can decode the frame, based on an operation rate.

7. A control method for a video stream processing apparatus including an input selector for selecting a plurality of video streams and a decoding section for executing decoding processes of the selected video streams in parallel, comprising the steps of:
analyzing the selected video streams to acquire encoded information on one frame of video; and
adjusting execution of the decoding processes of the selected video streams in accordance with the encoded information so that loads of the decoding processes in the decoding section are made even with respect to time.

8. A program for causing a computer to execute the control method for the video stream processing apparatus recited in Claim 7.

9. A recording medium on which the program recited in Claim 8 is recorded in a computer-readable manner.
